# EUROPEAN PATENT SPECIFICATION

(11) **EP 4 221 865 B1**
(45) Date of publication and mention of the grant of the patent: **14.08.2024**
(21) Application number: 21795146.6
(22) Date of filing: 27.09.2021
(51) Int. Cl.: B01D 46/10, B01D 46/52

(54) **FILTER ELEMENT**
FILTERELEMENT
ELÉMENT FILTRANT

(30) Priority: 29.09.2020 US 202063084588 P; 14.12.2020 US 202063124931 P
(43) Date of publication of application: 09.08.2023
(60) Divisional application: 24187867.7
(73) Proprietor: Parker-Hannifin Corporation, Cleveland, Ohio 44124 (US)
(72) Inventor: KRULL, Timothy L., Kearney, Nebraska 68845 (US)
(74) Representative: Murgitroyd & Company
(86) International application number: PCT/US2021/052197
(87) International publication number: WO 2022/072277

(56) References cited:
- US-A- 6 159 260
- US-A1- 2005 166 561
- US-A1- 2010 126 129
- US-A1- 2020 072 169

## Description

### TECHNICAL FIELD

The present invention relates to a filter element for use in an air filter assembly.

### BACKGROUND

Air filter assemblies are used in automotive and industrial applications for the purpose of filtering air for use in downstream systems. Unfiltered fluids, such as air, entering a system often contain contaminants and particulates that may be harmful, or at least inefficient, for use by downstream components and machinery. Thus, it can be important to filter as much of the contaminants and particulate matter out of the air stream as possible.

Filters or filter elements are typically mounted in the filter housings of the air filter assemblies and define the flow path of the air stream through the housing. Inlet air enters an upstream end of the filter element and exits at an opposing, downstream end. The filter elements support a filter media pack, such as a pleated panel filter, within a shell or frame. As the inlet air passes through the filter media pack, the filter media removes or at least reduces the contaminants and particulates in the air. After a period of use, the filter media typically becomes spent or saturated, which usually then requires removal of the filter element for cleaning or replacement.

As a removable element, the filter element is known to have a gasket or seal at its downstream end to create an air-tight seal between the filter element and the outlet of the housing of the filter assembly. Such a seal is important to prevent unfiltered air from leaking around or bypassing the filter element and thus entering the downstream system without having passed through the media. Such a seal can be provided as a separate gasket supported and/or adhesively fixed within a channel at the outer end of the frame of the filter element, and/or as a form-in-place urethane component around the outer end of the element. Due to the location of the downstream seal, the structure of the frame of the filter element, and the available volume within the housing of the filter assembly, the downstream seal is relatively easy to create and apply to the pack to provide an appropriate seal against the housing.

Filter elements are also known to have seals between the filter media pack and the frame of the filter element. If the filter media is not sealed within the filter element, the same issue of unfiltered air leaking or bypassing around the filter media and into the downstream system can occur. The seals within the filter element assembly can be more of a challenge to create than the seal between the element and the housing, as there is limited space within the frame of the element, and the location of the seal adjacent the frame can reduce the effective flow area through the media.

One technique has been to use adhesive to seal the edges of the filter media to the frame of the filter media pack. The adhesive seal can require a complicated frame structure, specialized dispensing equipment, and can be a challenge to replicate so that an effective seal is provided around the entire frame. The adhesive seal also often needs to be fixtured in position while the adhesive cures - which can result in slower manufacturing rates.

As such, it is believed there is a need for a filter element with an improved sealing structure between the filter media and the frame of the filter element, particularly at the upstream end of the media pack, which provides a consistent, robust seal around the frame of the filter element, and reduces the manufacturing time and complexity associated with the filter element. US 2010/126129 A1, US 6 159 260 A, US 2005/166561 A1 and US 2020/072169 A1 disclose relevant filter elements.

### SUMMARY

A novel filter element is provided having an improved sealing structure between the filter media and the frame of the filter element, which is particularly advantageous at the upstream end of the filter element. The improved sealing structure combines adhesive and mechanical retention techniques, and as such, provides a consistent, robust seal around the entire frame of the filter element, and which reduces the manufacturing time and complexity associated with the filter element.

In one example, the filter element includes a pleated panel filter media supported within a frame. The frame has an outlet panel at its downstream end with cross-brace ribbing. The cross-brace ribbing at the outlet secures and supports the filter media in place, preventing the filter media from protruding through the outlet and protecting the media from damage caused by deformation, while allowing outlet air to pass through the pleated media and through the ribbing. The outlet panel also has a gasket attachment surface around the perimeter of the outlet face of the outlet panel. A gasket is attached to the gasket attachment surface to provide an air-tight seal against the outlet of the housing of the filter assembly.

The frame further has two solid side panels attached along opposite side edges of the outlet panel, supporting the sides of the filter media. The panels can be hingedly secured to the outlet panel to facilitate assembling the filter element and extend substantially perpendicular to the outlet face of the outlet panel to form a U-shaped structure supporting the sides of the media.

The distal side edge of one, and preferably both panels of the frame, has an outwardly-facing, substantially U-shaped channel in cross-section. The U-shaped channel defines a media anchor channel for a seal bar. The anchor channel includes parallel inner and outer side walls, and an end wall. In one example, the inner wall of the media anchor channel can extend flush with the remainder of the side panel. The channel preferably extends along the entire side edge of each panel from one end of the panel to the other. The outer wall of the anchor channel can include a snap-fit tab or other locking geometry or structure on its outer surface.

A seal bar is located in at least one of the media anchor channels. In one example, the filter element includes a U-shaped channel on the distal side edge of each side panel, and a seal bar is located in each media anchor channel. The seal bars are preferably preformed and are substantially U-shaped in cross-section - also with parallel side walls and an end wall forming a channel. The seal bar is inverted and inserted into the media anchor channel with one of the side walls of the seal bar closely received between the side walls of the media anchor channel, and the other of the walls received exteriorly of the outer side wall of the media anchor channel. The shape of the seal bar cooperates with the shape of the media anchor channel to retain the seal bar within the channel. Preferably the seal bar and media anchor channel can interlock with one-another when attached. In one example, the inner surface of the outer wall of the seal bar can have a snap-fit tab or other locking geometry or structure for interengaging the snap-fit tab or other locking geometry or structure of the media anchor channel.

Before the seal bar is attached to the media anchor channel, a side edge of the pleated panel filter media is located at least partially within the channel. A bead of adhesive is applied along the channel either before or after the side edge of the media is located in the channel. The seal bar is then pressed into the media anchor channel with the adhesive retaining the seal bar and side edge of the media within the media anchor channel. The attachment of the seal bar to the media anchor channel captures the media side edge and sealingly secures the edge between the seal bar and the channel. The interengagement of the snap-fit tabs on the channel and the seal bar mechanically retains the seal bar in position in the channel, so that the remainder of the assembly of the filter pack can progress while the adhesive cures.

The filter element further includes a pair of end caps. The end caps can be pre-formed of a plastic material and are potted to the side panels of the frame and the ends of the media with an adhesive, sealing the open ends of the pleated media. The end caps each have a short sidewall that receives the ends of the pleated media panels. The sealing bars preferably extend along the edges of the side panels into abutting, substantially flush relation with the sidewalls of the end caps. The side edges of the pleated media are thereby secured and sealed along the entire length of the side panels of the filter element.

One or both of the end caps may also have flexible removal loops that extend from the end caps and across a portion of the exterior surface of the side panels of the frame. The removal loops facilitate installing and removing the filter element from the housing of the filter assembly.

The filter element as describe above provides an air-tight seal between the filter media and the frame of the filter element at the upstream end of the filter element to ensure unfiltered air does not leak around or bypass the filter media, and to thus ensure contaminants and particulate are not carried by the air flow to downstream components. The seal bars create a sealed interface that is held together by mechanical and adhesive means, thus improving the reliability of the sealed interface. Further, the design simplifies the manufacturing process and increases the manufacturing speed. Overall, an improved sealing structure between the filter media and the frame of the filter element, particularly at the upstream end of the element, is provided which provides a consistent, robust seal, and which reduces manufacturing time and complexity associated with the filter element.

### BRIEF DESCRIPTION OF THE DRAWINGS

Examples of the embodiment of this invention will now be described in further detail with reference to the accompanying drawings, in which:
FIG. 1 is a side view of an air filter assembly for the filter element of the present invention;
FIG 2. is an elevated perspective view of one example of a filter element for the air filter assembly of FIG.1;
FIG. 3 is an elevated perspective view of the frame of the filter element of FIG. 2;
FIG. 4 is a cross-sectional side view of the filter element of FIG. 2, taken substantially along the plane defined by the lines 4-4 in FIG 2;
FIG. 5 is a cross-sectional end view of the filter element of FIG. 2, taken substantially along the plane defined by the lines 5-5 in FIG 2;
FIG. 6 is an enlarged cross-sectional end view of a portion of the filter element of FIG. 5; and
FIG. 7 is an elevated perspective view of another example of the filter element constructed according to the principles of the present invention.

### DETAILED DESCRIPTION

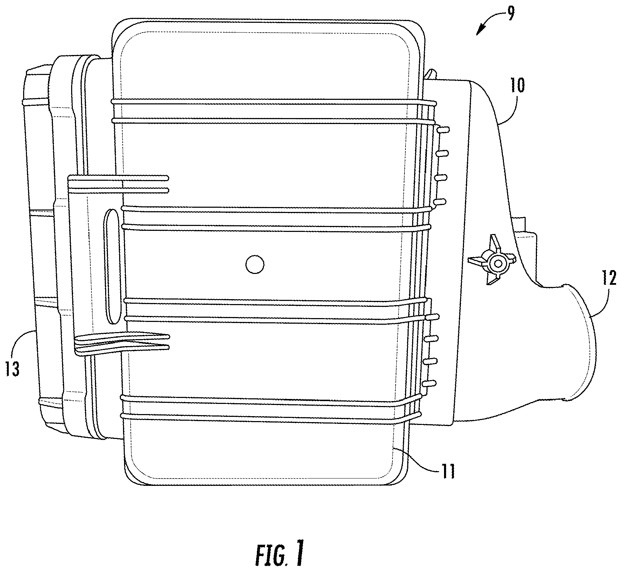

Referring initially to FIG. 1, a side view of a filter assembly appropriate for a filter element of the present invention is indicated generally at **9**. The filter assembly generally includes a housing **10** with a hinged cover **11**, an air outlet **12** and an air inlet **13**. The filter assembly is generally referred to as a "side entry" air filter, as a filter media pack is introduced into the side of the filter housing for use. While one specific example of an air filter housing is shown, it should be appreciated that such example is only for illustration purposes, and the filter element of the subject invention could be used with other housing configurations.

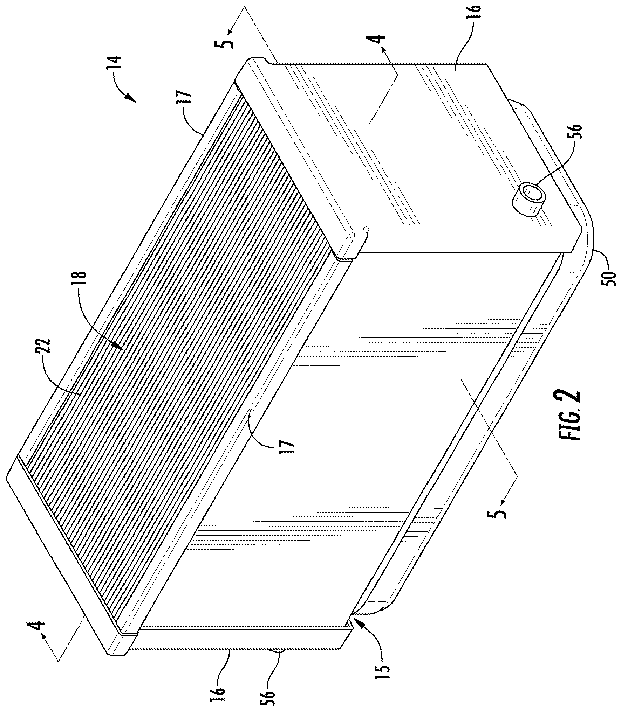

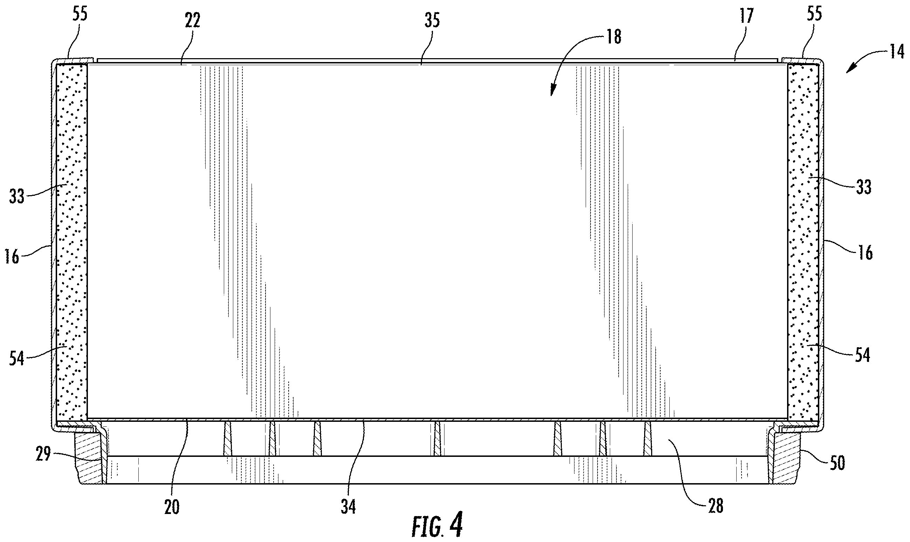

Referring now to FIG 2, a perspective illustration of one example of a filter element, indicated generally at **14**, is shown, for the air filter housing of FIG. 1. The filter element **14** generally comprises a frame, indicated generally at **15**, a pair of end caps **16**, a pair of seal bars **17**, and filter media, indicated generally at **18.** The filter element **14** has a downstream outflow end **20** (FIG. 4) and an upstream inflow end **22**, which in part define the airflow path through the filter element **14** and through the filter media **18**.

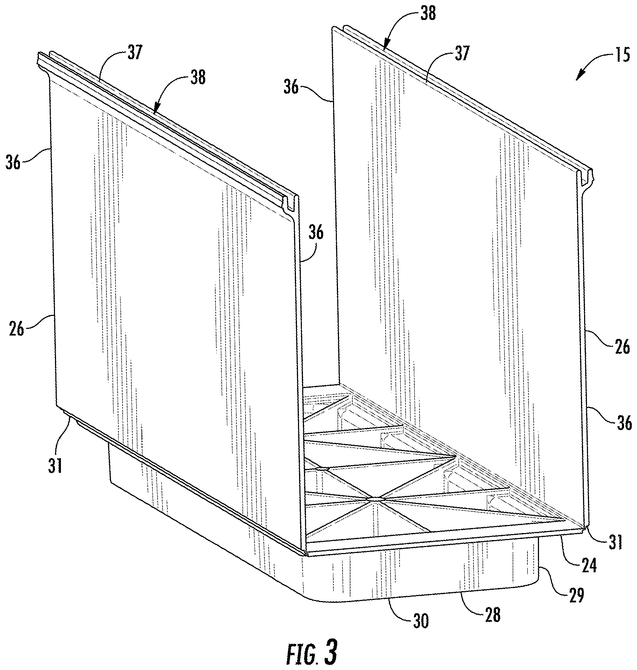

The frame **15** of the filter element **14** is shown in more detail in FIG. 3. The frame **15** comprises an outlet panel **24** and two solid side panels **26**, preferably formed of plastic or other appropriate lightweight, inexpensive material. The outlet panel **24** defines the outflow end **20** of the filter element **14**. In this example, the outlet panel **24** is substantially rectangular, although other geometries are possible. The outlet panel **24** has a cross-brace ribbing **28** that allows for the passage of air through the outlet panel **24** while also helping to secure and support the filter media in place and to prevent the filter media from protruding through the outlet panel **24** while also protecting the media from damage caused by deformation. The outlet panel **24** also has a gasket support section **29** with an outwardly-facing attachment surface **30**. The gasket attachment surface **30** surrounds the cross-brace ribbing and is slightly inset from the outer perimeter of the outlet panel **24**.

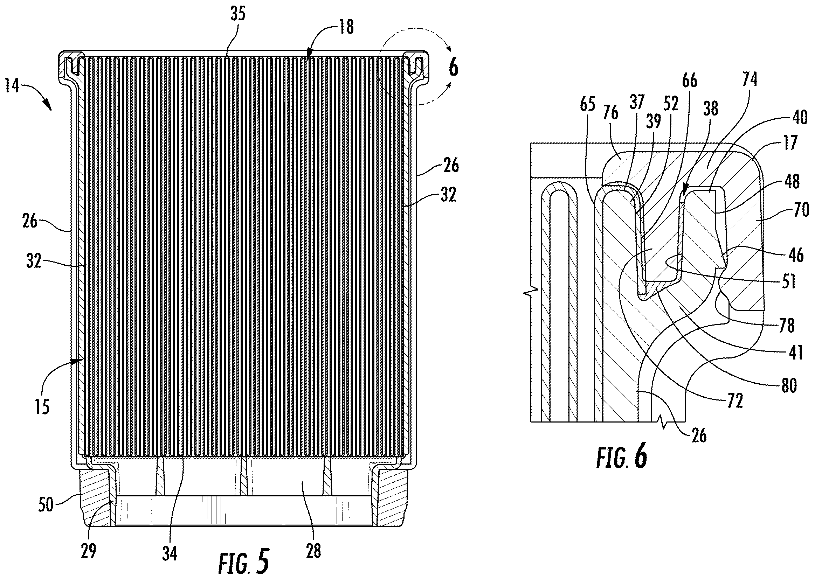

The side panels **26** in one example can have a rectangular configuration, with the inner edge of the panels **26** attached along the opposite side edges of the outlet panel **24**. In this example, the side panels **26** are attached via a living (unitary) hinge **31** along the opposing side edges of the outlet panel **24**. The living hinge **31** may have a reduced thickness relative to one or both of the outlet panel **24** and adjacent side panel **26**. To facilitate assembly of the filter element, the panels can be folded flat, and the media located against the outlet panel **24**. The side panels can then be folded up along the sides of the media. When the filter element **14** is fully assembled, the side panels **26** of the frame **15** extend substantially perpendicular to the outlet panel **24** and against the opposing sides of the media, as shown in FIG. 2 and FIG. 5. Alternatively, the side panels could be rigidly fixed to the outlet panel forming a generally U-shaped configuration and the media can be slid between the side panels until the media is abutting the outlet panel **24**. In this example, the side panels could be provided unitary with the outlet panel **24**, such as being molded in one piece, or could be provided as separate components and fixed such as with adhesive or other appropriate techniques. In any event, when assembled, the frame **15** has a substantially U-shaped configuration. In one example, the side panels **26** are molded in a planar orientation relative to outlet panel **24** and then folded upward during the assembly process, e.g. after the filter media has been placed adjacent the outlet panel **24**.

The filter media **18** can be a panel-type filter media of cellulose, polymer or other media appropriate for the particular application, and can be assembled in one or more layers of material. The media can be pleated, such as being formed in a pleating machine to have a plurality of pleats located in adjacent, surface-to-surface relation with one another to form a tight rectangular pack, with parallel sides **32**, parallel ends **33** and parallel upstream inlet and downstream outlet faces **35, 34**, respectively, as shown in FIG. 4 and 5. The media can be a single sheet of filter media folded to form a plurality of panels, a block of fluted media formed from a corrugated layer attached to a facer sheet, or other block-type media. One pleated panel media appropriate for the filter media pack is illustrated and described in USPN 10,357,731, which is incorporated herein by reference. The packed pleats are located within the frame **15** with the outlet face **34** of the media preferably supported against the cross ribs **28** of the outlet panel **24**, and with the flat outer side pleats **32** of the media supported by and against the side panels **26** of the frame. The ends **33** of the media are preferably flush with the end edges **36** (FIG. 3) of the panels **26**, while the inlet face **35** is preferably flush with the distal side edges **37** of the panels **26**. The pleats of the media thus extend parallel to the side panels **26** of the frame **15**.

As shown in FIGS. 2 and 4-5, a preformed gasket **50** of urethane or other appropriate resilient material, surrounds and is attached, such as with adhesive, to the gasket attachment surface **30** of gasket support section **29**. The gasket **50** promotes a secure and air-tight seal of the filter element **15** to the outlet of the filter assembly at the outflow end **20**. Other forms and material for a seal at the downstream end of the filter element could be used, as should be apparent to one of ordinary skill in the art.

Referring now to FIG. 3 and 6, the side edge **37** of one, and preferably both side panels **26** has a substantially U-shaped end, defining a media anchor channel, indicated generally at 38. The media anchor channel has an interior rounded wall **39**, parallel exterior wall **40** and inner or bottom end wall **41**. In the present example, the interior wall **39** is flush with and forms the distal end of the side panel **26** of the frame **15**. In other examples, the side panel **26** could be flush with the exterior wall **40** of the channel, or the panel could intersect the bottom wall **41** between the interior and exterior walls **39, 40**. In any event, the media anchor channel **38** preferably extends the entire length of the side edge **37** of the panel from one end to the other.

At least one, and preferably both media anchor channels **38** can also have a snap-tab **46** located on an external surface **48** of the exterior wall **40** of the media anchor channel **38**, the reason for which will be described more fully below. The snap-tab 46 extends along at least a portion, and preferably along the entire channel **38** from one end of the side panel to the other. In other examples, the snap-fit tab **46** may be located on the interior surface **51** of the external wall **40**, and/or on the interior surface **52** of interior wall **39** of the media anchor channel **38**.

Referring now to Figures 2 and 4, the end caps **16** of the media pack are each fixed to the frame **15** at the opposing open end faces **33** of the media. The end caps **16** can be formed from plastic or other appropriate lightweight, inexpensive material, and are potted with urethane **54** or other appropriate adhesive to promote a secure and air-tight seal on the frame **15** and against the ends of the filter media **18**. As a result, air passing from the inflow end **22** of the filter element is forced to pass axially downstream through an open pleat end between adjacent pleats, laterally through a pleat of the media, and then axially downstream between other adjacent pleats through an open pleat at the outlet end **20** of the filter media **18**, thus filtering the air.

Each end cap **16** can have short skirt portion as at **55** (FIG. 4), which receives the end of the media, and facilitates locating and securing the end cap to the media. Each end cap **16** can also have an outwardly-projecting end cap projection **56** (FIG. 2), which in one example, can be a cylindrical or annular projection. The end cap projections **56** serve as locating features when the filter element **14** is installed into the filter assembly. The filter assembly has a cooperative recess (not shown in FIG. 1) that locates and receives the end cap projection **56** to securely position and seal the filter media pack **14** within the filter assembly. The end cap projection **56** can have an appropriate geometry and can be located on the end cap **16** as appropriate for a particular design or application.

Referring again to FIG. 6, the outermost pleat **65** of the media located against each side panel **26** has a distal side edge **66** extending across the width of the media. The media side edge **66** is located so as to extend around and over the rounded end of the interior wall **39** of the media anchor channel **38** and at least partially into the media anchor channel **38**. Preferably the media edge **66** extends along the interior surface **52** of the interior wall **39** to, or substantially to, the bottom wall **41** of the channel.

The side edges **66** of the media are secured and sealed to the frame **15**. To this end, a bead or strip of adhesive **80** can be applied along the media anchor channel **38**, either before or after the side edge **66** of the media is located in the channel. Subsequently, a seal bar **17** is pressed into each channel. Alternatively, the bead of adhesive could be applied to the seal bar before it is pressed into the channel. The seal bars **17** are each U-shaped in cross-section, and can be pre-formed from an appropriate material, such as plastic or other lightweight, inexpensive material. As can be seen, when inverted, the shape of the seal bar **17** compliments the shape of the media anchor channel **38** such that the seal bars can be pressed into and closely received in a respective media anchor channel. In this example, the seal bar **17** has a substantially U-shaped configuration, with an exterior side wall **70,** a parallel interior side wall **72**, and an end wall **74**, defining a seal bar channel. A short flange **76** can extend laterally from the end wall **74** perpendicular to the side walls **70**,**72**, and across the end of the interior wall **39** of the media anchor channel **38**. The flange **76** can have an inside surface substantially matching the rounded configuration of the end of the interior wall **39**. The exterior side wall **70** can further include a snap-tab **78** extending along at least a portion, and preferably along the entire length of the wall, and toward the outer distal edge thereof.

With the side edge **66** of the filter media **18** received within the media anchor channel **38**, the seal bar **17** is inverted, and forced into the media anchor channel **38** such that the u-shapes of the bar and the channel interlock. The interior wall **72** of the seal bar is closely received between the interior wall **39** and exterior wall **40** of the media anchor channel **38.** The outer wall **70** of the seal bar is closely received along the outer wall **40** of the media anchor channel, such that the snap-tab **78** of the seal bar **17** engages the snap-tab **46** of the media anchor channel **38** to secure the seal bar within the channel. The side edge **66** of the media is captured between the inner wall **39** on the media anchor channel and inner wall **72** and flange **76** of the seal bar.

While both seal bars and channels are shown having a snap-tab engagement, it is possible such snap-tabs could be used with only one of the seal bar/channel engagements, with the media sealed to the frame along its other side using another technique; or that one or both of the seal bar/channel engagements could have other interengaging locking geometry or structure, such as ridges, tabs, or simply a friction or interference fit, to mechanically retain the seal bar(s) within the respective channel when assembled.

In other examples, the seal bar **17** may be received within the channel **38** such that the exterior wall **70** of the seal bar is received between the inner and outer walls **39**, **40** of the channel **38**, and the interior wall **72** of the seal bar located against an inner wall surface of the inner wall **39** of the media anchor channel. The snap-tabs **46**, **78** could thereby be located on the interior surface **51** of the outer wall **40** on the media anchor channel **38**, and the outer surface of the exterior wall **70** of the seal bar. Or the seal bar could have a T-shape or other configuration, such that only one wall of the seal bar is received within the media anchor channel **38**, and the locking feature is located on one (or both) surfaces of the wall.

In any event, the seal bars **17** are each mechanically held within a media anchor channel **38**, and extend along most if not the entire length of the media anchor channel **38** between the end caps **16**, with the outer surface of the seal bars being substantially flush with the outer surface of the end edges of the end cap. Alternatively, the end caps **16** could be configured to receive the ends of the seal bars **17**, with the seal bars thereby extending most if not all of the distance along the channel **38** between the ends **36** of the side panels.

The mechanical forces between the seal bar **17** and channel **38** retain the side edge **66** of the media within the media locking channel, and allow the adhesive **80** to cure and sealingly fix the media to the frame, without the use of specialized equipment and fixtures to hold the frame **15** and filter media **18** in place. The side edge **66** of the media is thus effectively and efficiently sealed along its entire length to the frame **15** within the media anchor channel **38** by the cooperation of the seal bar **17**, the adhesive bead **80**, and in at least some examples, the end caps **16**. This advantageously allows other manufacturing steps to occur while the adhesive is curing, or at least movement of the filter element without concern of compromising the adhesive seal between the media and the frame of the filter element. This simplifies the manufacturing process and can increase the manufacturing speed and efficiency.

Again, as described previously, having such a sealed interface between the side edges of the media and frame of the element prevents unfiltered air from leaking or bypassing around the edges **66** of the filter media **18** and passing as a dirty air stream to downstream components.

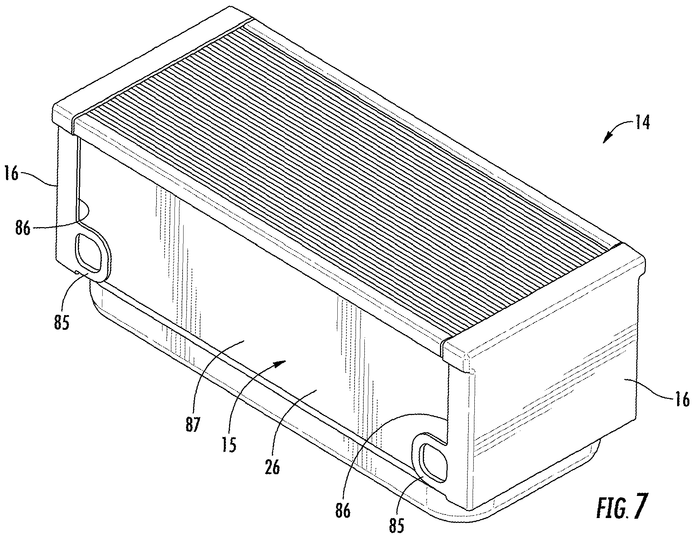

Finally, as shown in FIG. 7, a further feature of the filter element **14** is illustrated, where the end caps **16** can also each have a flexible removal loop **85**. The loops can be unitary with the end caps or formed separately and attached such as the potting compound used between the end caps and media. The flexible removal loops **85** extend from a side edge **86** of the end cap **16** and across a portion of the exterior surface **87** of one of the side panels **26** of the frame **15**. The removal loops **85** can be grabbed by a user to facilitate the installation and removal of the filter element **14** from the filter housing.

As such, the filter element as describe above provides an air-tight seal between the filter media and the frame of the filter element, particularly at the upstream end of the filter element, to ensure unfiltered air does not leak around or bypass the filter media, and to thus ensure contaminants and particulate are not carried by the air flow to downstream components. A sealed interface is provided between the pleated media and the frame of the filter element that is created by both adhesive and mechanical forces, thus improving the reliability of the sealed interface. Overall, an improved upstream sealing structure between the filter media and the frame of the filter element is created which provides a consistent, robust seal, and which reduces manufacturing time and complexity associated with the filter element.

## Claims

1. A filter element (14), comprising:
a. a frame (15) having an outlet panel (24) and two side panels (26) along opposite sides of the outlet panel (24), the side panels (26) each having a U-shaped media anchor channel (38) along a distal side edge of the respective side panel;
b. filter media pack (18) supported within the frame (15), the filter media pack including side edges (66) along opposite sides of the media (18), each media side edge (66) being at least partially received within a respective media anchor channel (38);
c. a bead of adhesive (80) along each media anchor channel (38) for adhesively sealing the respective media side edge (66) within the media anchor channel (38); and,
d. two seal bars (17), each seal bar (17) having a geometry that cooperates with a respective media anchor channel (38) to mechanically retain the respective media side edge (66) in the respective media anchor channel (38).

2. The filter element of claim 1, where the media anchor channel (38) on each side of the frame (15) has a snap-tab (46) along the length of the media anchor channel (38).

3. The filter element of claim 2, where each of the seal bars (17) has a snap-tab (78) that cooperates with the snap-tab (46) of a respective media anchor channel (38) to mechanically retain the seal bar (17) within the respective media anchor channel (38).

4. The filter element as in claim 3, wherein the snap-tab (78) on each seal bar (17) extends the length of the seal bar (17).

5. The filter element of claim 1, wherein each media anchor channel (38) has an interior wall (39) and parallel exterior wall (40), and the respective media side edge (66) extends around and over the interior wall (39) of the media anchor channel (38) and at least partly into the respective media anchor channel (38).

6. The filter element of claim 1, further comprising a pair of end caps (16), each end cap (16) fixed to a respective end of the frame (15) such that each end cap (16) seals against an associated end face of the filter media (18).

7. The filter element of claim 6, further including locking means within each media anchor channel (38) for mechanically retaining a respective seal bar within the channel.

8. The filter element of claim 6, further including locking means (78) on each seal bar (17) for mechanically retaining the seal bar (17) within a respective media anchor channel (38).

9. The filter element of claim 6, further including locking means (46, 78) associated with each channel (38) and with each seal bar (17) for mechanically retaining each seal bar (17) within a respective media anchor channel (38).

10. The filter element of claim 6, further including locking means (46, 78) for mechanically retaining each seal bar (17) within a respective media anchor channel (38).

11. The filter element as in claim 1, wherein each seal bar (17) has a pair of walls (70, 72) defining a U-shaped configuration, with one of the walls (72) of the seal bar (17) closely received within the respective media anchor channel (38).

12. The filter element as in claim 11, wherein the bead of adhesive (80) is located between the media anchor channel (38) and the one wall (72) of the seal bar (17).

13. The filter element of claim 1, where at least one of the end caps (16) has a flexible removal loop (85) extending from an edge of the end cap (16) and across a portion of one of the side panels (26) of the frame (15).

14. The filter element of claim 1, wherein the filter media pack (18) includes a pleated panel filter media.

15. A method of assembling a filter element (14) according to one of the preceding claims having a frame (15) with an outlet panel (24) and two side panels (26) along opposite sides of the outlet panel (24), the side panels (26) each having a U-shaped media anchor channel (38) along a distal side edge of the respective side panel (26); a filter media pack (18) including side edges (66) along opposite sides of the filter media pack (18); and two seal bars (17), each seal bar (17) having a geometry that can mechanically inter-engage with a geometry of a respective media anchor channel (38), comprising the steps of:
a. locating the filter media pack (18) in the frame (15) and against the outlet panel (24), with the side panels (26) of the frame (15) along opposite sides of the filter media pack (18), and such that the side edges (66) of the filter media pack (18) are each received within a respective media anchor channel (38);
b. depositing a bead of adhesive (80) along each media anchor channel (38); and
c. locating each seal bar (17) within a respective media anchor channel (38) to mechanically retain the respective media side edge (66) within the respective media anchor channel (38).

## Patentansprüche

1. Ein Filterelement (14), das Folgendes beinhaltet:
a. einen Rahmen (15), der eine Auslassplatte (24) und zwei Seitenplatten (26) entlang gegenüberliegender Seiten der Auslassplatte (24) aufweist, wobei die Seitenplatten (26) jeweils eine U-förmige Mediumankernut (38) entlang eines distalen Seitenrands der jeweiligen Seitenplatte aufweisen;
b. ein Filtermediumpaket (18), das innerhalb des Rahmens (15) gehalten wird, wobei das Filtermediumpaket Seitenränder (66) entlang gegenüberliegender Seiten des Mediums (18) umfasst, wobei die Mediumseitenränder (66) jeweils mindestens zum Teil in einer jeweiligen Mediumankernut (38) aufgenommen sind;
c. einen Wulst von Klebstoff (80) entlang jeder Mediumankernut (38) zum klebenden Dichten des jeweiligen Mediumseitenrands (66) innerhalb der Mediumankernut (38); und
d. zwei Dichtleisten (17), wobei die Dichtleisten (17) jeweils eine Geometrie aufweisen, die mit einer jeweiligen Mediumankernut (38) zusammenwirkt, um den jeweiligen Mediumseitenrand (66) in der jeweiligen Mediumankernut (38) mechanisch zu halten.

2. Filterelement gemäß Anspruch 1, wobei die Mediumankernut (38) auf jeder Seite des Rahmens (15) eine Schnappnase (46) entlang der Länge der Mediumankernut (38) aufweist.

3. Filterelement gemäß Anspruch 2, wobei die Dichtleisten (17) jeweils eine Schnappnase (78) aufweisen, die mit der Schnappnase (46) einer jeweiligen Mediumankernut (38) zusammenwirkt, um die Dichtleiste (17) innerhalb der jeweiligen Mediumankernut (38) mechanisch zu halten.

4. Filterelement gemäß Anspruch 3, wobei sich die Schnappnase (78) an jeder Dichtleiste (17) über die Länge der Dichtleiste (17) erstreckt.

5. Filterelement gemäß Anspruch 1, wobei die Mediumankernuten (38) jeweils eine innere Wand (39) und eine parallele äußere Wand (40) aufweisen und sich der jeweilige Mediumseitenrand (66) um und über die innere Wand (39) der Mediumankernut (38) und mindestens zum Teil in die jeweilige Mediumankernut (38) erstreckt.

6. Filterelement gemäß Anspruch 1, ferner beinhaltend ein Paar Endkappen (16), wobei die Endkappen (16) jeweils derart an einem jeweiligen Ende des Rahmens (15) befestigt sind, dass die Endkappen (16) jeweils an einer assoziierten Stirnfläche des Filtermediums (18) dichten.

7. Filterelement gemäß Anspruch 6, ferner umfassend Verriegelungsmittel innerhalb jeder Mediumankernut (38) zum mechanische Halten einer jeweiligen Dichtleiste innerhalb der Nut.

8. Filterelement gemäß Anspruch 6, ferner umfassend Verriegelungsmittel (78) an jeder Dichtleiste (17) zum mechanischen Halten der Dichtleiste (17) innerhalb einer jeweiligen Mediumankernut (38).

9. Filterelement gemäß Anspruch 6, ferner umfassend mit jeder Nut (38) und mit jeder Dichtleiste (17) assoziierte Verriegelungsmittel (46, 78) zum mechanischen Halten jeder Dichtleiste (17) innerhalb einer jeweiligen Mediumankernut (38).

10. Filterelement gemäß Anspruch 6, ferner umfassend Verriegelungsmittel (46, 78) zum mechanischen Halten jeder Dichtleiste (17) innerhalb einer jeweiligen Mediumankernut (38).

11. Filterelement gemäß Anspruch 1, wobei die Dichtleisten (17) jeweils ein Paar Wände (70, 72) aufweisen, die eine U-förmige Konfiguration definieren, wobei eine der Wände (72) der Dichtleiste (17) eng innerhalb der jeweiligen Mediumankernut (38) aufgenommen ist.

12. Filterelement gemäß Anspruch 11, wobei sich der Wulst von Klebstoff (80) zwischen der Mediumankernut (38) und der einen Wand (72) der Dichtleiste (17) befindet.

13. Filterelement gemäß Anspruch 1, wobei mindestens eine der Endkappen (16) eine biegsame Entnahmeschlaufe (85) aufweist, die sich von einem Rand der Endkappe (16) und über einen Abschnitt einer der Seitenplatten (26) des Rahmens (15) hinweg erstreckt.

14. Filterelement gemäß Anspruch 1, wobei das Filtermediumpaket (18) ein Filtermedium in Form einer plissierten Matte umfasst.

15. Ein Verfahren zum Zusammensetzen eines Filterelements (14) gemäß einem der vorhergehenden Ansprüche, das Folgendes aufweist: einen Rahmen (15) mit einer Auslassplatte (24) und zwei Seitenplatten (26) entlang gegenüberliegender Seiten der Auslassplatte (24), wobei die Seitenplatten (26) jeweils eine U-förmige Mediumankernut (38) entlang eines distalen Seitenrands der jeweiligen Seitenplatte (26) aufweisen; ein Filtermediumpaket (18), das Seitenränder (66) entlang gegenüberliegender Seiten des Filtermediumpakets (18) umfasst; und zwei Dichtleisten (17), wobei die Dichtleisten (17) jeweils eine Geometrie aufweisen, die mit einer Geometrie einer jeweiligen Mediumankernut (38) in wechselseitigen mechanischen Eingriff kommen kann, beinhaltend die folgenden Schritte:
a. Positionieren des Filtermediumpakets (18) in dem Rahmen (15) und an der Auslassplatte (24) mit den Seitenplatten (26) des Rahmens (15) entlang gegenüberliegender Seiten des Filtermediumpakets (18) und derart, dass die Seitenränder (66) des Filtermediumpakets (18) jeweils innerhalb einer jeweiligen Mediumankernut (38) aufgenommen werden;
b. Ablegen eines Wulsts von Klebstoff (80) entlang jeder Mediumankernut (38); und
c. Positionieren jeder Dichtleiste (17) innerhalb einer jeweiligen Mediumankernut (38), um den jeweiligen Mediumseitenrand (66) innerhalb der jeweiligen Mediumankernut (38) zu halten.

## Revendications

1. Un élément filtrant (14), comprenant :
a. un châssis (15) ayant un panneau de sortie (24) et deux panneaux latéraux (26) le long de côtés opposés du panneau de sortie (24), les panneaux latéraux (26) ayant chacun un canal d'ancrage de média en forme de U (38) le long d'un bord latéral distal du panneau latéral respectif ;
b. une cartouche de média filtrant (18) soutenue au sein du châssis (15), la cartouche de média filtrant incluant des bords latéraux (66) le long de côtés opposés du média (18), chaque bord latéral de média (66) étant au moins partiellement reçu au sein d'un canal d'ancrage de média (38) respectif ;
c. un bourrelet d'adhésif (80) le long de chaque canal d'ancrage de média (38) pour sceller de façon adhésive le bord latéral de média (66) respectif au sein du canal d'ancrage de média (38) ; et,
d. deux mâchoires de scellement (17), chaque mâchoire de scellement (17) ayant une géométrie qui coopère avec un canal d'ancrage de média (38) respectif afin de retenir de façon mécanique le bord latéral de média (66) respectif dans le canal d'ancrage de média (38) respectif.

2. L'élément filtrant de la revendication 1, où le canal d'ancrage de média (38) de chaque côté du châssis (15) a une languette d'encliquetage (46) sur toute la longueur du canal d'ancrage de média (38).

3. L'élément filtrant de la revendication 2, où chacune des mâchoires de scellement (17) a une languette d'encliquetage (78) qui coopère avec la languette d'encliquetage (46) d'un canal d'ancrage de média (38) respectif afin de retenir de façon mécanique la mâchoire de scellement (17) au sein du canal d'ancrage de média (38) respectif.

4. L'élément filtrant tel que dans la revendication 3, dans lequel la languette d'encliquetage (78) sur chaque mâchoire de scellement (17) se prolonge sur la longueur de la mâchoire de scellement (17).

5. L'élément filtrant de la revendication 1, dans lequel chaque canal d'ancrage de média (38) a une paroi intérieure (39) et une paroi extérieure (40) parallèle, et le bord latéral de média (66) respectif se prolonge autour et par-dessus la paroi intérieure (39) du canal d'ancrage de média (38) et au moins partiellement dans le canal d'ancrage de média (38) respectif.

6. L'élément filtrant de la revendication 1, comprenant en outre une paire de bouchons d'extrémité (16), chaque bouchon d'extrémité (16) étant fixé à une extrémité respective du châssis (15) de telle sorte que chaque bouchon d'extrémité (16) est scellé contre une face d'extrémité associée du média filtrant (18).

7. L'élément filtrant de la revendication 6, incluant en outre des moyens de verrouillage au sein de chaque canal d'ancrage de média (38) pour retenir de façon mécanique une mâchoire de scellement respective au sein du canal.

8. L'élément filtrant de la revendication 6, incluant en outre des moyens de verrouillage (78) sur chaque mâchoire de scellement (17) pour retenir de façon mécanique la mâchoire de scellement (17) au sein d'un canal d'ancrage de média (38) respectif.

9. L'élément filtrant de la revendication 6, incluant en outre des moyens de verrouillage (46, 78) associés à chaque canal (38) et à chaque mâchoire de scellement (17) pour retenir de façon mécanique chaque mâchoire de scellement (17) au sein d'un canal d'ancrage de média (38) respectif.

10. L'élément filtrant de la revendication 6, incluant en outre des moyens de verrouillage (46, 78) pour retenir de façon mécanique chaque mâchoire de scellement (17) au sein d'un canal d'ancrage de média (38) respectif.

11. L'élément filtrant tel que dans la revendication 1, dans lequel chaque mâchoire de scellement (17) a une paire de parois (70, 72) définissant une configuration en forme de U, l'une des parois (72) de la mâchoire de scellement (17) étant reçue de façon étroite au sein du canal d'ancrage de média (38) respectif.

12. L'élément filtrant tel que dans la revendication 11, dans lequel le bourrelet d'adhésif (80) est placé entre le canal d'ancrage de média (38) et l'une paroi (72) de la mâchoire de scellement (17).

13. L'élément filtrant de la revendication 1, où au moins un des bouchons d'extrémité (16) a une boucle de retrait souple (85) s'étendant à partir d'un bord du bouchon d'extrémité (16) et sur toute une portion d'un des panneaux latéraux (26) du châssis (15).

14. L'élément filtrant de la revendication 1, dans lequel la cartouche de média filtrant (18) inclut un média filtrant en panneau plissé.

15. Un procédé consistant à assembler un élément filtrant (14) selon une des revendications précédentes ayant un châssis (15) avec un panneau de sortie (24) et deux panneaux latéraux (26) le long de côtés opposés du panneau de sortie (24), les panneaux latéraux (26) ayant chacun un canal d'ancrage de média (38) en forme de U le long d'un bord latéral distal du panneau latéral (26) respectif ; une cartouche de média filtrant (18) incluant des bords latéraux (66) le long de côtés opposés de la cartouche de média filtrant (18) ; et deux mâchoires de scellement (17), chaque mâchoire de scellement (17) ayant une géométrie qui peut entrer en prise mutuelle de façon mécanique avec une géométrie d'un canal d'ancrage de média (38) respectif, comprenant les étapes consistant à :
a. placer la cartouche de média filtrant (18) dans le châssis (15) et contre le panneau de sortie (24), avec les panneaux latéraux (26) du châssis (15) le long de côtés opposés de la cartouche de média filtrant (18), et de telle sorte que les bords latéraux (66) de la cartouche de média filtrant (18) soient chacun reçus au sein d'un canal d'ancrage de média (38) respectif ;
b. déposer un bourrelet d'adhésif (80) le long de chaque canal d'ancrage de média (38) ; et
c. placer chaque mâchoire de scellement (17) au sein d'un canal d'ancrage de média (38) respectif afin de retenir de façon mécanique le bord latéral de média (66) respectif au sein du canal d'ancrage de média (38) respectif.
